# FASCICULE DE BREVET EUROPEEN

(11) **EP 1 276 625 B1**
(45) Date de publication et mention de la délivrance du brevet: **19.05.2004**
(21) Numéro de dépôt: 01919564.3
(22) Date de dépôt: 26.03.2001
(51) Int. Cl.: B60K 11/08

(54) **DISPOSITIF DE REGULATION DU DEBIT D'UN FLUX D'AIR CIRCULANT SOUS UN CAPOT DE VEHICULE AUTOMOBILE**
DURCHFLUSSREGELVORRICHTUNG FÜR EINEM UNTER EINER FAHRZEUGMOTORHAUBE ZIRKULIERENDEN LUFTSTROM
DEVICE FOR REGULATING AN AIR STREAM RATE FLOWING UNDER A MOTOR VEHICLE HOOD

(30) Priorité: 25.04.2000 FR 0005235
(43) Date de publication de la demande: 22.01.2003
(73) Titulaire: Peugeot Citroen Automobiles SA, 92200 Neuilly sur Seine (FR)
(72) Inventeur: GAGNEPAIN, Laurent, F-92500 Rueil Malmaison (FR)
(74) Mandataire: de la Bigne, Guillaume Michel Marie
(86) Numéro de dépôt international: PCT/FR2001/000909
(87) Numéro de publication internationale: WO 2001/081109

(56) Documents cités:
- DE-A- 3 019 599
- DE-A- 4 304 336
- DE-A- 19 742 730
- FR-A- 2 738 779
- PATENT ABSTRACTS OF JAPAN vol. 012, no. 340 (M-740), 13 septembre 1988 (1988-09-13) & JP 63 101117 A (NIPPON DENSO CO LTD), 6 mai 1988 (1988-05-06)

## Description

La présente invention concerne un dispositif de régulation du débit d'un flux d'air circulant sous un capot de véhicule automobile.

On connaît déjà dans l'état de la technique, notamment d'après DE-43 04 336, comportant les caractéristiques du préambule de la revendication 1, et FR-2 738 779, un dispositif de régulation du débit d'un flux d'air circulant sous un capot de véhicule automobile, du type comprenant des moyens d'obturation d'une ouverture d'entrée du flux d'air, ces moyens d'obturation étant réglables entre des positions de flux d'air maximal et minimal en fonction d'au moins un paramètre de commande.

Les moyens d'obturation, agencés généralement dans le bloc avant du véhicule, comprennent par exemple (voir notamment DE-43 04 336) un cadre, délimitant une ouverture d'entrée du flux d'air sous le capot, sur lequel sont montés pivotants des volets formant des moyens d'obturation de cette ouverture pilotés notamment par un actionneur électrique.

Dans de nombreux cas, les moyens d'obturation sont réglables entre des positions de flux d'air maximal et minimal en fonction de la température d'un liquide caloporteur circulant dans un circuit de refroidissement d'un moteur thermique du véhicule automobile (voir notamment DE-43 04 336). Ce circuit de refroidissement comporte un radiateur, en échange thermique avec le flux d'air, agencé dans le bloc avant du véhicule.

De plus en plus fréquemment, on souhaite équiper les véhicules automobiles d'une pompe à chaleur destinée notamment à la climatisation de leur habitacle.

Habituellement une pompe à chaleur comporte un circuit à compression comprenant un évaporateur, en échange thermique avec une source froide, et un condenseur, en échange thermique avec une source chaude, ces éléments étant raccordés entre eux par un compresseur et un détendeur. Le fluide frigorigène se vaporise dans l'évaporateur en enlevant de la chaleur à la source froide. Le compresseur aspire le fluide vaporisé et le refoule dans le condenseur refroidi (par échange thermique avec la source chaude) dans lequel il se condense. Le détendeur laisse passer le fluide frigorigène liquide vers l'évaporateur en abaissant sa pression.

Dans de nombreuses applications, le condenseur est placé dans le bloc avant du véhicule, en échange thermique avec le flux d'air circulant sous le capot.

L'invention a pour but d'optimiser le pilotage des moyens d'obturation de l'ouverture d'entrée du flux d'air circulant sous le capot en fonction des organes du véhicule en échange thermique avec ce flux d'air.

A cet effet, l'invention a pour objet un dispositif de régulation du débit d'un flux d'air circulant sous un capot de véhicule automobile, du type précité, caractérisé en ce que les moyens d'obturation sont réglables en fonction de la pression d'un fluide frigorigène circulant dans une pompe à chaleur en échange thermique avec le flux d'air.

Suivant d'autres caractéristiques de ce dispositif :
- la pompe à chaleur comporte un condenseur de fluide frigorigène en échange thermique avec le flux d'air, la pression de fluide frigorigène étant mesurée dans un tronçon de circuit de fluide frigorigène disposé en aval du condenseur et en amont d'un détendeur de fluide frigorigène ;
- la position des moyens d'obturation est une fonction de la pression de fluide frigorigène telle que les moyens d'obturation sont en position de flux d'air minimal :
   tant que la pression de fluide frigorigène n'a pas atteint une pression d'ouverture des moyens d'obturation, et
   dès que la pression de fluide frigorigène atteint une pression de fermeture des moyens d'obturation inférieure à la pression d'ouverture des moyens d'obturation ;
- les moyens d'obturation sont également réglables en fonction de la température d'un liquide caloporteur circulant dans un circuit de refroidissement d'un moteur thermique du véhicule automobile en échange thermique avec le flux d'air ;
- le circuit de refroidissement comporte un radiateur en échange thermique avec le flux d'air, la température de liquide caloporteur étant mesurée dans un tronçon du circuit de refroidissement disposé en amont du radiateur et en aval du moteur thermique ;
- la position des moyens d'obturation est une fonction de la température du liquide caloporteur telle que les moyens d'obturation sont en position de flux d'air minimal :
   tant que la température du liquide caloporteur n'a pas atteint une température d'ouverture des moyens d'obturation, et
   dès que la température du liquide caloporteur atteint une température de fermeture des moyens d'obturation inférieure à la température d'ouverture des moyens d'obturation ;
- les moyens d'obturation sont également réglables en fonction de la température de l'air d'au moins une zone d'un compartiment de logement du moteur thermique agencé sous le capot du véhicule automobile ;
- le flux d'air est entraîné par un ventilateur entraîné par un moteur électrique commandé en fonction de la pression du fluide frigorigène ;
- le moteur électrique est désactivé :
   tant que la pression du fluide frigorigène n'a pas atteint une pression d'activation du moteur électrique supérieure à la pression d'ouverture des moyens d'obturation, et
   dès que la pression du fluide frigorigène atteint une pression de désactivation du moteur électrique inférieure à la pression d'activation du moteur électrique et supérieure à la pression de fermeture des moyens d'obturation ;
- le moteur électrique est également commandé en fonction de la température du liquide caloporteur ;
- le moteur électrique est à l'arrêt
   tant que la température du liquide caloporteur n'a pas atteint une température d'activation du moteur électrique supérieure à la température d'ouverture des moyens d'obturation, et
   dès que la température du liquide caloporteur atteint une température de désactivation du moteur électrique inférieure à la température d'activation du moteur électrique et supérieure à la température des de fermeture moyens d'obturation.

L'invention sera mieux comprise à la lecture de la description qui va suivre donnée uniquement à titre d'exemple et faite en se référant aux dessins dans lesquels :
- la figure 1 est une vue schématique de la partie avant d'un véhicule automobile muni d'un dispositif de régulation de flux d'air selon l'invention ;
- les figures 2 et 3 montrent des diagrammes illustrant des exemples de réglage des moyens d'obturation et de commande du moteur électrique d'entraînement du ventilateur en fonction respectivement de la pression de fluide frigorigène de la pompe à chaleur et de la température du liquide caloporteur du circuit de refroidissement du moteur thermique.

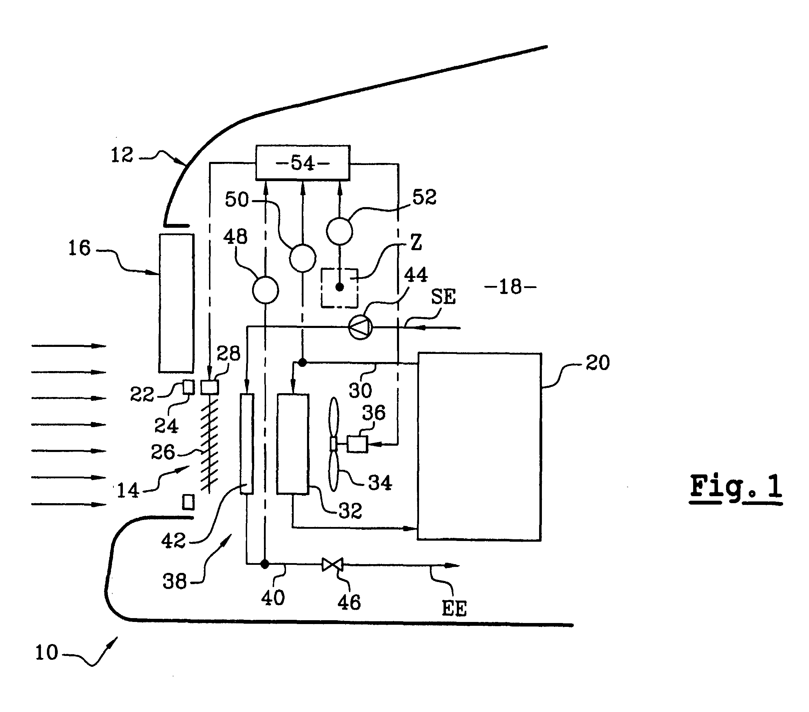

On a représenté sur la figure 1, une partie avant 10 d'un véhicule automobile comportant notamment un capot 12 et un bloc-avant 14 portant un pare-chocs 16. Le capot 12 délimite un compartiment 18 de logement d'un groupe motopropulseur. Ce dernier comporte un moteur thermique classique 20.

Le bloc-avant 14 comporte un cadre 22 délimitant une ouverture 24 d'entrée d'un flux d'air extérieur au véhicule. Ce flux d'air est destiné à circuler sous le capot 12 en échange thermique avec plusieurs organes qui seront décrits ultérieurement.

L'ouverture 24 peut être obturée à l'aide de moyens classiques 26, tels que des volets pivotants, pilotés par un actionneur électrique 28.

Le moteur thermique 20 est refroidi par un circuit classique 30 de liquide caloporteur comportant un aérotherme agencé de préférence dans le bloc-avant 14. Le liquide caloporteur est par exemple un mélange d'eau et d'antigel. L'aérotherme comprend un radiateur 32, dans lequel circule le liquide caloporteur, en échange thermique avec le flux d'air, et un groupe moto-ventilateur dont on a représenté sur la figure 1 un ventilateur 34 entraîné par un moteur électrique 36. Ce ventilateur 34 permet d'entraîner le flux d'air provenant de l'extérieur du véhicule de façon à le faire circuler sous le capot.

Le véhicule est équipé d'une pompe à chaleur 38, destinée par exemple à la climatisation de l'habitacle du véhicule, muni d'un circuit classique 40 de fluide frigorigène choisi par exemple parmi un dérivé chloré et fluoré du méthane ou de l'éthane (Fréon), un hydrocarbure, l'ammoniac ou le dioxyde de carbone.

De façon classique, ce circuit 40 comprend un évaporateur (non représenté) dont la sortie SE est raccordée à l'entrée d'un condenseur 42 par l'intermédiaire d'un compresseur 44. Le condenseur 42, agencé de préférence dans le bloc avant, est en échange thermique avec le flux d'air. La sortie du condenseur 42 est raccordée à l'entrée EE de l'évaporateur par un détendeur 46.

Les moyens d'obturation 26 sont réglables entre des positions de flux d'air maximal et minimal en fonction de la pression du fluide frigorigène circulant dans la pompe à chaleur 38.

De préférence, la pression de fluide frigorigène est mesurée par un capteur classique 48 dans un tronçon du circuit 40 de fluide frigorigène disposé en aval du condenseur 42 et en amont du détendeur 46.

La pression de fluide frigorigène peut permettre de plus de commander le moteur électrique 36 d'entraînement du ventilateur 34.

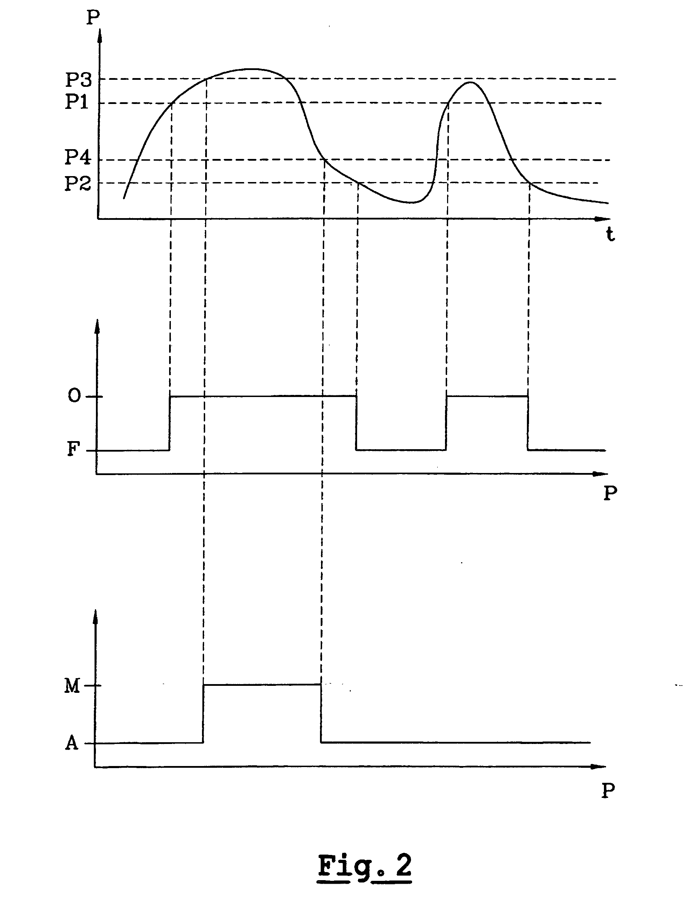

La figure 2 illustre un exemple de réglage des moyens d'obturation 26 et de commande du moteur électrique 36 en fonction de la pression de fluide frigorigène de la pompe à chaleur.

Le diagramme supérieur de la figure 2 représente un exemple de courbe P(t) d'évolution de la pression P de fluide frigorigène en fonction du temps t.

Le diagramme intermédiaire de la figure 2 représente la position des moyens d'obturation 26 en fonction la pression P de fluide frigorigène, cette position pouvant varier entre des positions de flux d'air minimal F, par exemple nul, et maximal O. Sur ce diagramme intermédiaire, on voit que la position des moyens d'obturation est une fonction de la pression de fluide frigorigène telle que les moyens d'obturation sont en position de flux d'air minimal :
tant que la pression de fluide frigorigène n'a pas atteint une pression P1 d'ouverture des moyens d'obturation 26, et
dès que la pression de fluide frigorigène atteint une pression P2 de fermeture des moyens d'obturation 26 inférieure à la pression P1 d'ouverture de ces moyens d'obturation.

La pression P1 d'ouverture des moyens d'obturation 26 est par exemple de l'ordre de 15 à 20 bars (15.10⁵ à 20.10⁵ Pa), selon le type de circuit 40 de fluide frigorigène. La pression P2 de fermeture des moyens d'obturation 26 est par exemple de l'ordre de 10 à 15 bars (10.10⁵ à 15.10⁵ Pa), également selon le type de circuit 40.

Dans l'exemple illustré, entre les pressions successives P1 d'ouverture des moyens d'obturation 26 et P2 de fermeture de ces moyens d'obturation 26, ces derniers sont dans leur position de flux d'air maximal O de façon à favoriser autant que possible les échanges thermiques entre le condenseur 42 et le flux d'air entrant sous le capot. Il est bien entendu possible de prévoir une loi plus complexe d'ouverture et de fermeture progressives ou par paliers des moyens d'obturation 26 en fonction de la pression de fluide frigorigène.

Le diagramme inférieur de la figure 2 représente l'état activé M ou désactivé A du moteur électrique 36 d'entraînement du ventilateur 34. Sur ce diagramme inférieur, on voit que le moteur électrique est désactivé :
tant que la pression du fluide frigorigène n'a pas atteint une pression P3 d'activation du moteur électrique 36 supérieure à la pression P1 d'ouverture des moyens d'obturation 26, et
dès que la pression du fluide frigorigène atteint une pression P4 de désactivation du moteur électrique 36 inférieure à la pression P3 d'activation du moteur électrique 36 et supérieure à la pression P2 de fermeture des moyens d'obturation 26.

Dans l'exemple illustré, entre les pressions successives P3 et P4, le moteur électrique 36 est activé de façon à tourner à une vitesse constante nominale de façon à favoriser autant que possible les échanges thermiques entre le condenseur 42 et le flux d'air entrant sous le capot. Il est bien entendu possible de prévoir une loi plus complexe d'augmentation et de diminution progressives ou par paliers de la vitesse du moteur électrique 36 en fonction de la pression de fluide frigorigène.

Les moyens d'obturation 26 sont également réglables entre des positions de flux d'air maximal et minimal en fonction de la température du liquide caloporteur circulant dans le circuit 30 de refroidissement du moteur thermique 20.

De préférence, la température du liquide caloporteur est mesurée par un capteur classique 50 dans un tronçon du circuit de refroidissement 30 disposé en amont du radiateur 32 et en aval du moteur thermique 20.

La température du liquide caloporteur peut permettre de plus de commander le moteur électrique 36 d'entraînement du ventilateur 34.

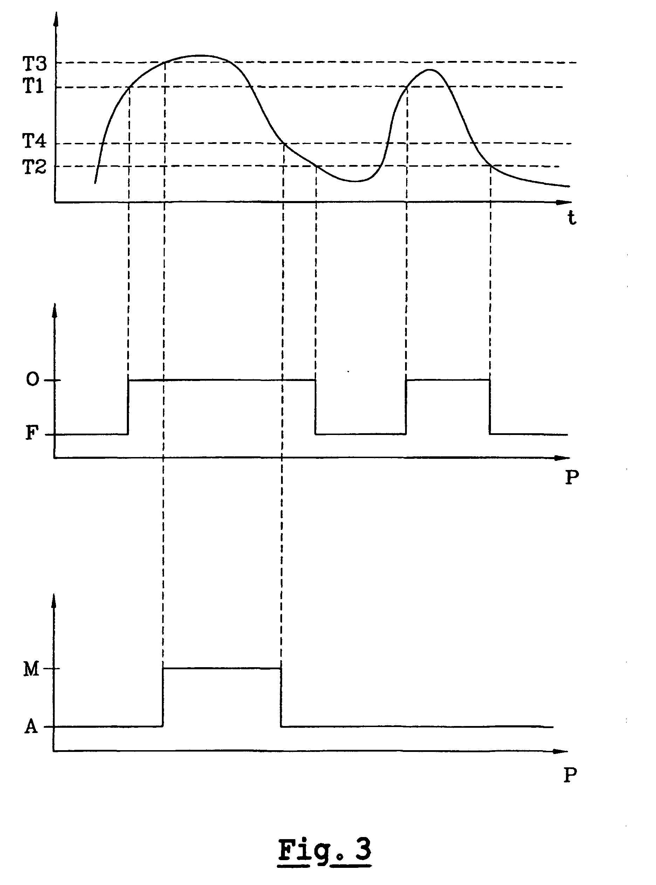

La figure 3 illustre un exemple de réglage des moyens d'obturation 26 et de commande du moteur électrique 36 en fonction de la température du liquide caloporteur.

Le diagramme supérieur de la figure 3 représente un exemple de courbe P(t) d'évolution de la température du liquide caloporteur en fonction du temps t.

Le diagramme intermédiaire de la figure 3 représente la position des moyens d'obturation 26 en fonction la température du liquide caloporteur, cette position pouvant varier entre des positions de flux d'air minimal F, par exemple nul, et maximal O. Sur ce diagramme intermédiaire, on voit que la position des moyens d'obturation est une fonction de la température du liquide caloporteur telle que les moyens d'obturation sont en position de flux d'air minimal:
tant que la température du liquide caloporteur n'a pas atteint une température T1 d'ouverture des moyens d'obturation 26, et
dès que la température du liquide caloporteur atteint une température T2 de fermeture des moyens d'obturation 26 inférieure à la température T1 d'ouverture de ces moyens d'obturation.

La température T1 d'ouverture des moyens d'obturation 26 est par exemple de l'ordre de 80 à 110 °C, selon le type de moteur thermique 20. La température T2 de fermeture des moyens d'obturation 26 est par exemple de l'ordre de 60 à 85 °C, également selon le type de moteur thermique 20.

Entre les températures successives T1 d'ouverture des moyens d'obturation 26 et T2 de fermeture de ces moyens d'obturation 26, ces derniers sont dans leur position de flux d'air maximal O de façon à favoriser autant que possible les échanges thermiques entre le radiateur 32 et le flux d'air entrant sous le capot.

Comme pour le paramètre « pression de fluide frigorigène », il est possible de prévoir, entre les températures successives T1 d'ouverture des moyens d'obturation 26 et T2 de fermeture de ces moyens d'obturation 26, une loi plus complexe que celle illustrée d'ouverture et de fermeture progressives ou par paliers des moyens d'obturation 26 en fonction du paramètre « température du liquide caloporteur ».

Le diagramme inférieur de la figure 3 représente l'état activé M ou désactivé A du moteur électrique 36 d'entraînement du ventilateur 34. Sur ce diagramme inférieur, on voit que le moteur électrique est désactivé :
tant que la température du liquide caloporteur n'a pas atteint une température T3 d'activation du moteur électrique 36 supérieure à la température T1 d'ouverture des moyens d'obturation 26, et
dès que la température du liquide caloporteur atteint une température T4 de désactivation du moteur électrique 36 inférieure à température T3 d'activation de ce moteur électrique 36 et supérieure à la température T2 de fermeture des moyens d'obturation 26.

Entre les températures successives T3 et T4, le moteur électrique 36 est activé de façon à tourner à une vitesse constante nominale de façon à favoriser autant que possible les échanges thermiques entre le radiateur 32 et le flux d'air entrant sous le capot.

Comme pour le paramètre « pression de fluide frigorigène », il est possible de prévoir, entre ces températures successives T3 et T4, une loi plus complexe que celle illustrée d'augmentation et de diminution progressives ou par paliers de la vitesse du moteur électrique 36 en fonction du paramètre « température du liquide caloporteur ».

Les moyens d'obturation 26 sont également réglables en fonction de la température de l'air d'au moins une zone Z du compartiment 18. Cette température est relevée au moyen d'un capteur classique 52.

La zone Z entoure par exemple un organe dont le bon fonctionnement ou l'intégrité dépend de la température de l'air qui l'environne. Cet organe peut être un pré-catalyseur, une batterie, un dispositif électronique ou électrique, etc. Ainsi, les moyens d'obturation 26 seront ouverts par exemple lorsque la température de l'air de la zone entourant un dispositif électronique dépasse 60°C.

Les signaux correspondant aux grandeurs mesurées ou relevées par les capteurs de pression 48 et de température 50,52 sont transmis, en entrée, à un boîtier de commande 54 fournissant, en sortie, des signaux de commande de l'actionneur 28, pilotant les moyens d'obturation 26, et du moteur électrique 36. Le boîtier de commande 54 gère donc les commandes de l'actionneur 28 et du moteur électrique 36 en fonction des paramètres « pression de fluide frigorigène », « température du liquide du circuit de refroidissement » et « température de la zone Z ».

Parmi les avantages de l'invention, on notera que celle-ci permet d'optimiser le pilotage des moyens d'obturation de l'ouverture d'entrée du flux d'air circulant sous le capot en fonction des organes du véhicule en échange thermique avec ce flux d'air.

Plus particulièrement, le réglage de la position des moyens d'obturation 26 par au moins deux paramètres tels que la pression de fluide frigorigène et la température du liquide du circuit de refroidissement permet de n'ouvrir ces moyens d'obturation qu'à bon escient. Ainsi :
- d'une part, on évite les périodes pendant lesquelles les moyens d'obturation sont ouverts de façon inopportune en nuisant inutilement à l'aérodynamique du véhicule,
- et d'autre part, en maintenant les moyens d'obturation fermés aussi longtemps que possible lors du démarrage du véhicule,
   ◆ on favorise la rapidité de la montée en température du moteur thermique et , le cas échéant, du chauffage de l'habitacle,
   ◆ et on minimise la consommation du moteur thermique ainsi que l'émission de polluants.

## Revendications

1. Dispositif de régulation du débit d'un flux d'air circulant sous un capot (12) de véhicule automobile, du type comprenant des moyens d'obturation (26) d'une ouverture (24) d'entrée du flux d'air, ces moyens d'obturation (26) étant réglables entre des positions de flux d'air maximal et minimal en fonction d'au moins un paramètre de commande, **caractérisé en ce que** les moyens d'obturation (26) sont réglables en fonction de la pression d'un fluide frigorigène circulant dans une pompe à chaleur (38) en échange thermique avec le flux d'air.

2. Dispositif selon la revendication 1, **caractérisé en ce que** la pompe à chaleur (38) comporte un condenseur (42) de fluide frigorigène en échange thermique avec le flux d'air, la pression de fluide frigorigène étant mesurée dans un tronçon de circuit (40) de fluide frigorigène disposé en aval du condenseur (42) et en amont d'un détendeur (46) de fluide frigorigène.

3. Disposition selon la revendication 1 ou 2, **caractérisé en ce que** la position des moyens d'obturation (26) est une fonction de la pression de fluide frigorigène telle que les moyens d'obturation (26) sont en position de flux d'air minimal :
tant que la pression de fluide frigorigène n'a pas atteint une pression (P1) d'ouverture des moyens d'obturation (26), et
dès que la pression de fluide frigorigène atteint une pression (P2) de fermeture des moyens d'obturation (26) inférieure à la pression (P1) d'ouverture des moyens d'obturation (26).

4. Dispositif selon l'une quelconque des revendications précédentes, **caractérisé en ce que** les moyens d'obturation (26) sont également réglables en fonction de la température d'un liquide caloporteur circulant dans un circuit (30) de refroidissement d'un moteur thermique (20) du véhicule automobile en échange thermique avec le flux d'air.

5. Dispositif selon la revendication 4, **caractérisé en ce que** le circuit de refroidissement (30) comporte un radiateur (32) en échange thermique avec le flux d'air, la température de liquide caloporteur étant mesurée dans un tronçon du circuit de refroidissement (30) disposé en amont du radiateur (32) et en aval du moteur thermique.

6. Dispositif selon la revendication 4 ou 5, **caractérisé en ce que** la position des moyens d'obturation (26) est une fonction de la température du liquide caloporteur telle que les moyens d'obturation (26) sont en position de flux d'air minimal :
tant que la température du liquide caloporteur n'a pas atteint une température (T1) d'ouverture des moyens d'obturation (26), et
dès que la température du liquide caloporteur atteint une température (T2) de fermeture des moyens d'obturation (26) inférieure à la température (T1) d'ouverture des moyens d'obturation (26).

7. Dispositif selon l'une quelconque des revendications précédentes, **caractérisé en ce que** les moyens d'obturation (26) sont également réglables en fonction de la température de l'air d'au moins une zone (Z) d'un compartiment (18) de logement du moteur thermique (20) agencé sous le capot du véhicule automobile.

8. Dispositif selon l'une quelconque des revendications précédentes, **caractérisé en ce que** le flux d'air est entraîné par un ventilateur (34) entraîné par un moteur électrique (36) commandé en fonction de la pression du fluide frigorigène.

9. Dispositif selon les revendications 3 et 8 prises ensemble, **caractérisé en ce que** le moteur électrique (36) est désactivé :
tant que la pression du fluide frigorigène n'a pas atteint une pression (P3) d'activation du moteur électrique (36) supérieure à la pression (P1) d'ouverture des moyens d'obturation (26), et
dès que la pression du fluide frigorigène atteint une pression (P4) de désactivation du moteur électrique (36) inférieure à la pression (P3) d'activation du moteur électrique (36) et supérieure à la pression (P2) de fermeture des moyens d'obturation (26).

10. Dispositif selon les revendications 4 et 8 prises ensemble, **caractérisé en ce que** le moteur électrique (36) est également commandé en fonction de la température du liquide caloporteur.

11. Dispositif selon les revendications 6 et 10 prises ensemble, **caractérisé en ce que** le moteur électrique (36) est à l'arrêt
tant que la température du liquide caloporteur n'a pas atteint une température (T3) d'activation du moteur électrique (36) supérieure à la température (T1) d'ouverture des moyens d'obturation (26), et
dès que la température du liquide caloporteur atteint une température (T4) de désactivation du moteur électrique (36) inférieure à la température (T3) d'activation du moteur électrique et supérieure à la température (T2) de fermeture des moyens d'obturation (26).

## Patentansprüche

1. Vorrichtung zur Durchflussregelung eines Luftstroms, der unter einer Haube (12) eines Kraftfahrzeugs zirkuliert, umfassend Verschlussmittel (26) für eine Eintrittsöffnung (24) des Luftstroms, wobei diese Verschlussmittel (26) zwischen Positionen eines maximalen und eines minimalen Luftstroms in Abhängigkeit von mindestens einem Steuerparameter einstellbar sind, **dadurch gekennzeichnet, dass** die Verschlussmittel (26) in Abhängigkeit vom Druck eines Kältefluids einstellbar sind, das in einer Wärmepumpe (38) in thermischem Austausch mit dem Luftstrom zirkuliert.

2. Vorrichtung nach Anspruch 1, **dadurch gekennzeichnet, dass** die Wärmepumpe (38) einen Kondensator (42) eines Kältefluids in thermischem Austausch mit dem Luftstrom umfasst, wobei der Druck des Kältefluids in einem Abschnitt des Kältefluidkreises (40) gemessen wird, der stromabwärts zum Kondensator (42) und stromaufwärts zu einem Druckminderer (46) des Kältefluids angeordnet ist.

3. Vorrichtung nach Anspruch 1 oder 2, **dadurch gekennzeichnet, dass** die Position der Verschlussmittel (26) eine Funktion des Drucks des Kältefluids ist, so dass sich die Verschlussmittel (26) in der Position des minimalen Luftstroms befinden:
bis der Druck des Kältefluids einen Öffnungsdruck (P1) der Verschlussmittel (26) erreicht hat, und
bis der Druck den Kältefluids einen Druck (P2) zum Verschließen der Verschlussmittel (26) erreicht hat, der geringer als der Öffnungsdruck (P1) der Verschlussmittel (26) ist.

4. Vorrichtung nach einem der vorhergehenden Ansprüche, **dadurch gekennzeichnet, dass** die Verschlussmittel (26) auch in Abhängigkeit von der Temperatur einer Wärmeaustauschflüssigkeit, die in einem Kühlkreis (30) eines Verbrennungsmotors (20) des Kraftfahrzeugs in thermischem Austausch mit dem Luftfluss zirkuliert, einstellbar sind.

5. Vorrichtung nach Anspruch 4, **dadurch gekennzeichnet, dass** der Kühlkreis (30) einen Radiator (32) in thermischem Austausch mit dem Luftstrom umfasst, wobei die Temperatur der Wärmeaustauschflüssigkeit in einem Abschnitt des Kühlkreises (30) gemessen wird, der stromaufwärts zum Radiator (32) und stromabwärts zum Verbrennungsmotor angeordnet ist.

6. vorrichtung nach Anspruch 4 oder 5, **dadurch gekennzeichnet, dass** die Position der Verschlussmittel (26) eine Funktion der Temperatur der Wärmeaustauschflüssigkeit ist, so dass sich die Verschlussmittel (26) in der Position des minimalen Luftstroms befinden:
bis die Temperatur der Wärmeaustauschflüssigkeit eine Öffnungstemperatur (T1) der Verschlussmittel (26) erreicht hat, und
bis die Temperatur der Wärmeaustauschflüssigkeit eine Temperatur (T2) zum Verschließen der Verschlussmittel (26) erreicht hat, die geringer als die Öffnungstemperatur (T1) der Verschlussmittel (26) ist.

7. Vorrichtung nach einem der vorhergehenden Ansprüche, **dadurch gekennzeichnet, dass** die Verschlussmittel (26) auch in Abhängigkeit von der Temperatur der Luft von mindestens einer Zone (Z) eines Lagerabteils (18) des Verbrennungsmotors (20), der unter der Haube des Kraftfahrzeugs angeordnet ist, einstellbar sind.

8. Vorrichtung nach einem der vorhergehenden Ansprüche, **dadurch gekennzeichnet, dass** der Luftstrom von einem Ventilator (34) angetrieben wird, der von einem Elektromotor (36), der in Abhängigkeit vom Druck des Kältefluids gesteuert ist, angetrieben wird.

9. Vorrichtung nach den Ansprüchen 3 und 8 gemeinsam, **dadurch gekennzeichnet, dass** der Elektromotor (36) deaktiviert wird:
bis der Druck des Kältefluids einen Druck (P3) zur Aktivierung des Elektromotors (36) erreicht hat, der größer als der Öffnungsdruck (P1) der Verschlussmittel (26) ist, und
bis der Druck des Kältefluids einen Druck (P4) zur Deaktivierung des Elektromotors (36) erreicht, der geringer als der Aktivierungsdruck (P3) des Elektromotors (36) und höher als der Druck (P2) zum Verschließen der Verschlussmittel (26) ist.

10. Vorrichtung nach den Ansprüchen 4 und 8 gemeinsam, **dadurch gekennzeichnet, dass** der Elektromotor (36) auch in Abhängigkeit von der Temperatur der Wärmeaustauschflüssigkeit gesteuert wird.

11. Vorrichtung nach den Ansprüchen 6 und 10 gemeinsam, **dadurch gekennzeichnet, dass** sich der Elektromotor (36) im Stillstand befindet,
bis die Temperatur der Wärmeaustauschflüssigkeit eine Temperatur (T3) zur Aktivierung des Elektromotors (36) erreicht hat, die größer als die Temperatur (T1) zum Öffnen der Verschlussmittel (26) ist, und
bis die Temperatur der Wärmeaustauschflüssigkeit eine Temperatur (T4) zur Deaktivierung des Elektromotors (36) erreicht hat, die geringer als die Temperatur (T3) zur Aktivierung des Elektromotors und größer als die Temperatur (T2) zum Verschließen der Verschlussmittel (26) ist.

## Claims

1. A device for regulating the flow rate of a stream of air flowing under a motor vehicle hood (12), the device being of the type comprising shutter means (26) for shutting an air flow inlet opening (24), said shutter means (26) being adjustable between maximum and minimum air flow positions as a function of at least one control parameter, the device being **characterized in that** the shutter means (26) are adjustable as a function of the pressure of a refrigerant circulating in a heat pump (38) in heat exchange with the air flow.

2. A device according to claim 1, **characterized in that** the heat pump (38) comprises a refrigerant condenser (42) in heat exchange with the air flow, the pressure of the refrigerant being measured in a segment of the refrigerant circuit (40) disposed downstream from the condenser (42) and upstream from a refrigerant expander (46).

3. A device according to claim 1 or 2, **characterized in that** the position of the shutter means (26) is a function of the pressure of the refrigerant such that the shutter means (26) are in the minimum air flow position:
so long as the pressure of the refrigerant has not reached a pressure (P1) for opening the shutter means (26); and
as soon as the pressure of the refrigerant reaches a pressure (P2) for closing the shutter means (26), the pressure (P2) being lower than the pressure (P1) for opening the shutter means (26).

4. A device according to any preceding claim, **characterized in that** the shutter means (26) are also adjustable as a function of the temperature of a cooling liquid flowing in a circuit (30) for cooling a motor vehicle engine (20) in heat exchange with the air flow.

5. A device according to claim 4, **characterized in that** the cooling circuit (30) includes a radiator (32) in heat exchange with the air flow, the temperature of the cooling liquid being measured in a segment of the cooling circuit (30) disposed upstream from the radiator (32) and downstream from the engine.

6. A device according to claim 4 or 5, **characterized in that** the position of the shutter means (26) is a function of the temperature of the cooling liquid, such that the shutter means (26) are in the minimum air flow position:
so long as the temperature of the cooling liquid has not reached a temperature (T1) for opening the shutter means (26); and
as soon as the temperature of the cooling liquid reaches a temperature (T2) for closing the shutter means (26), the temperature (T2) being lower than the temperature (T1) for opening the shutter means (26).

7. A device according to any preceding claim, **characterized in that** the shutter means (26) are also adjustable as a function of the temperature of the air in at least one zone (Z) of a compartment (18) housing the engine (20) disposed beneath the hood of the motor vehicle.

8. A device according to any preceding claim, **characterized in that** the air flow is driven by a fan (34), itself driven by an electric motor (36) controlled as a function of the pressure of the refrigerant.

9. A device according to claims 3 and 8 taken together, **characterized in that** the electric motor (36) is deactivated:
so long as the pressure of the refrigerant has not reached a pressure (P3) for activating the electric motor (36), which pressure (P3) is greater than the pressure (P1) for opening the shutter means (26); and
as soon as the pressure of the refrigerant reaches a pressure (P4) for deactivating the electric motor (36), which pressure (P4) is less than the pressure (P3) for activating the electric motor (36) and greater than the pressure (P2) for closing the shutter means (26).

10. A device according to claims 4 and 8 taken together, **characterized in that** the electric motor (36) is also controlled as a function of the temperature of the cooling liquid.

11. A device according to claims 6 and 10 taken together, **characterized in that** the electric motor (36) is switched off:
so long as the temperature of the cooling liquid has not reached a temperature (T3) for activating the electric motor (36), which temperature (T3) is greater than the temperature (T1) for opening the shutter means (26); and
as soon as the temperature of the cooling liquid reaches a temperature (T4) for deactivating the electric motor (36), which temperature (T4) is less than the temperature (T3) for activating the electric motor an greater than the temperature (T2) for closing the shutter means (26).
